# EUROPEAN PATENT APPLICATION

(11) **EP 1 213 418 A2**
(43) Date of publication of application: **12.06.2002**
(21) Application number: 01309584.9
(22) Date of filing: 13.11.2001
(51) Int. Cl.: E05B 47/00, E05B 65/12, H02K 7/06

(54) **Actuator**

(30) Priority: 29.11.2000 GB 0029062
(71) Applicant: Meritor Light Vehicle Systems (UK) Ltd, Birmingham B30 3BW (GB)
(72) Inventor: Fisher, Sidney, Solihull, West Midlands B90 2HB (GB)
(74) Representative: Jones, John Bryn

(57) **Abstract**

An actuator including a motor operable to move an output member the actuator further including a shuttle and a caming arrangement axially movable relative to each other to provide rotational indexing of the shuttle and the caming arrangement relative to each other, so that different output positions of the output member are provided for.

## Description

The present invention relates to actuators, and in particular actuators for use in association with vehicle door locks such as car (automobile) door locks.

Known vehicle door lock actuators are required to provide an output position corresponding to an unlocked condition of the associated door and also an output position corresponding to a locked condition of the associated door.

Furthermore some vehicle door lock actuators are further required to provide an output position corresponding to a superlocked condition of a vehicle door.

For the avoidance of doubt, the term locked is used to mean that a door is unable to be opened from the outside but can be opened from the inside, and the term superlocked is used to mean a door which cannot be opened from either the inside or the outside.

An object of the present invention is to provide an improved form of actuator.

Thus according to the present invention there is provided an actuator including a motor operable to move an output member, the actuator further including a shuttle and a caming arrangement axially movable relative to each other to provide rotational indexing of the shuttle and caming arrangement relative to each other, so that different output positions of the actuator are provided for.

Advantageously such an arrangement can use one basic actuator assembly and by interchanging of the cam arrangement can provide for an actuator which locks/unlocks an associated door lock or alternatively locks/unlocks/superlocks an associated door lock.

Furthermore such an arrangement advantageously provides for a motor that only needs to be powered in one direction.

The invention will now be described, by way of example only, with reference to accompanying drawings in which:-
Figure 1 is an exploded view of an actuator according to the present invention;
Figure 2 is an exploded view of an alternative cam arrangement for use in the embodiment shown in figure 1;
Figures 3 and 4 are developed views of the cam arrangements of figures 1 and 2 respectively;
Figure 5 is a exploded view of a further embodiment of an actuator according to the present invention;
Figures 6 and 7 are developed views of the cam arrangement of figure 5;
Figure 8 is an exploded view of an alternative form of cam arrangement for use in the actuator of figure 5;
Figures 9 and 10 are developed views of the cam arrangement of figure 8, and
Figure 11 is a partial schematic view of a further embodiment of an actuator according to the present invention.

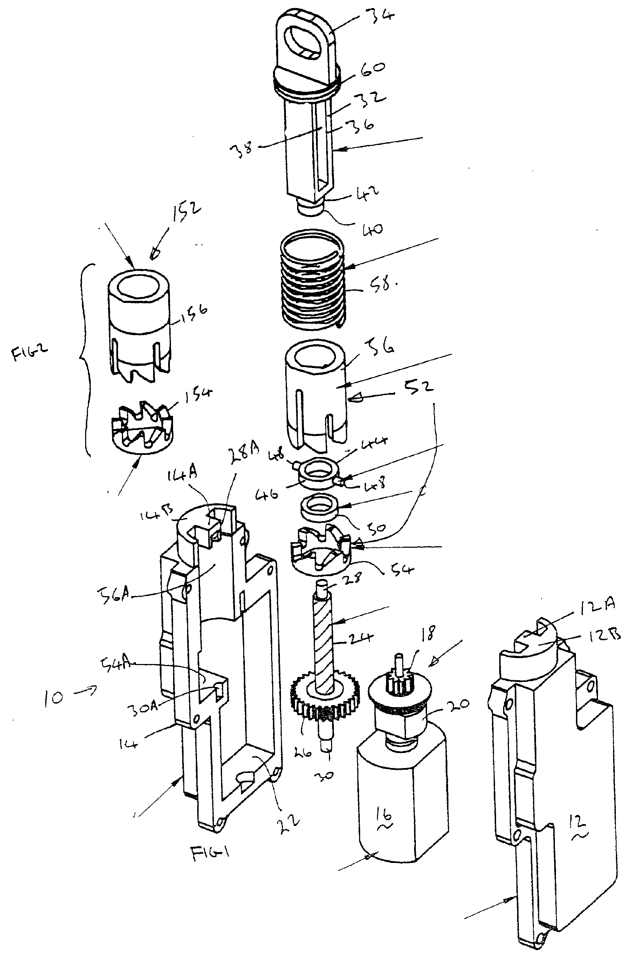

With reference to figure 1 there is shown a actuator 10 having a right and left hand casing 12 and 14 respectively.

A motor 16 is capable of driving pinion 18 via centrifugal clutch 20. The motor, pinion and centrifugal clutch are secured in the casings 12 and 14 in recess 22 (only shown for left hand casing 14).

In this case the motor is a DC electric motor, though other motors would be suitable.

A worm screw 24 is rotationally fast with gear 26. Ends 28 and 30 of the worm screw sit in bearing housing 28A and 30A respectively (only shown on left hand casing 14).

Worm screw 24 is thus rotatable within the right and left hand casings but axially fast therein.

The actuator further includes an output member in the form of a plunger 32 having a first end 34 for connection to components to be actuated. The plunger includes a body portion 36 having an elongate slot 38. At a second end 40 is a spigot 42 having an internal thread (not shown) for engagement with the worm screw 24.

A shuttle in the form of cam follower 44 has an annular body 46 and two diametrically opposed cam follower pins 48.

Cam follower 44 is rotatably mounted on spigot 42 and is retained axially in position by cam follower retainer ring 50 also being mounted on spigot 42 and being axially secured thereto.

A caming arrangement 52 is provided by first cam ring 54 and second cam ring 56.

Each cam ring is generally cylindrical and has an array of teeth around the circumference of one end.

In this case cam ring 54 has eight teeth T1 (see fig 3), all identical with each tooth having a tooth edge T2. Between adjacent teeth edges T2 there is provided a cam follower stop S1. In this case the axial height of all teeth edges T2 is the same and the axial height of all cam followers stops S1 is the same.

Cam ring 56 also has an array of eight teeth, four of which (T3) are of one profile and the remaining four of which (T4) are of a different profile. It should be noted that the teeth edges T5 of all teeth T3 and T4 are at the same axial position. Cam follower stops S2 and S3 are alternately positioned between teeth T4 and T3 with cam follower stops S2 all being at the same axial position which is different from the axial position of cam follower stops S3.

With the actuator 10 in an assembled condition, pinion 18 engages with gear 26 and worm screw 24 engages with the internally threaded hole (not shown) of spigot 42. As mentioned above, worm screw 24 is axially fast within the right and left hand casings thus rotation of worm screw via the motor 16, centrifugal clutch 20, pinion 18 and gear 26 will cause the plunger 32 to move in an axial direction.

Cam ring 54 and 56 are secured rotationally and axially fast in recesses 54A and 56A of the casings.

The outer diameter of annular body 46 is a clearance fit within the bore of cam rings 54 and 56. However, cam follower pins 48 are positioned at a radius that allows them to engage the teeth and cam follower stops of the cam rings 54 and 56.

The plunger 32 is assembled into the casings 12 and 14 such that bosses 12A and 14A of the casing sit within elongate slot 38 thus preventing the plunger 32 from rotating in use.

A spring 58 abuts rim 60 of plunger 32 and also abuts boss 12B and 14B of the right and left hand casings to bias the plunger in a upward direction when viewing figure 1.

Upward movement of plunger 32 is limited by contact between cam follower pins 48 and either cam follower stops S2 (where the plunger is in a raised position when viewing figure 1) or by contact with cam follower stops S3 (where the plunger is in a mid position when viewing figure 1).

### Operation of the actuator is as follows:-

It is assumed the start position of one of the cam follower pins 48 is in position 1 of figure 3 in abutment with cam follower stop S3.

Therefore the other cam follower pin 48 is in position 1A in abutment with a corresponding cam follower S3.

The motor is energised causing the centrifugal clutch 20 to spin and engage whereupon pinion 18 rotates causing gear 26 to rotate and hence worm screw 24 to rotate. Engagement of worm 24 with the internally threaded hole of spigot 42 causes the plunger to move downwards when viewing figure 1. This downward movement of the plunger causes the cam following pin 48 to move from position 1 as shown in figure 3 progressively to position 2 whereupon continued downward movement of the plunger causes the cam follower pin 48 to move downward and leftward when viewing figure 3 such that it achieves the position 3 wherein it is in abutment with cam follower stop S1. At this point the motor is stalled and shortly afterwards the power to the motor is cut.

The spring 58 is under sufficient compression such that it can now lift the plunger and hence the cam follower pin 48 moves progressively from the position 3 through position 4 to position 5 as shown in figure 3. At position 5 the cam follower pin is in engagement with cam follower stop S2 and this then limits the upward movement of the plunger.

When the motor is subsequently energised again the cam, follower pin 48 moves progressively from position 5 through position 6 to position 7 as shown in figure 3, and when the power to the motor is cut the cam follower pin 48 moves progressively from position 7 through position 8 to position 9 as shown in figure 3. It can be seen that with the cam follower pin 48 in either position 1 or position 9 the plunger is at the same axial position since the cam follower pin is at the same axial position.

It can be seen that with each powering of the motor the plunger moves downwards compressing spring 48, and as the power is cut to the motor the plunger moves upwards to one of two heights as spring 58 partially relaxes. Furthermore as the motor is energised the cam follower is caused to rotate through 45 degrees and as the power is cut to the motor the cam follower again rotates in the same direction through a further 45 degrees. Thus four energising/de-energising cycles of the motor will cause the cam follower to rotates through 360 degrees.

It can be seen that when the motor 16 is powered, the plunger 32 always achieves a particular axial position but when the motor is deactivated then the plunger can achieve one of two different axial positions.

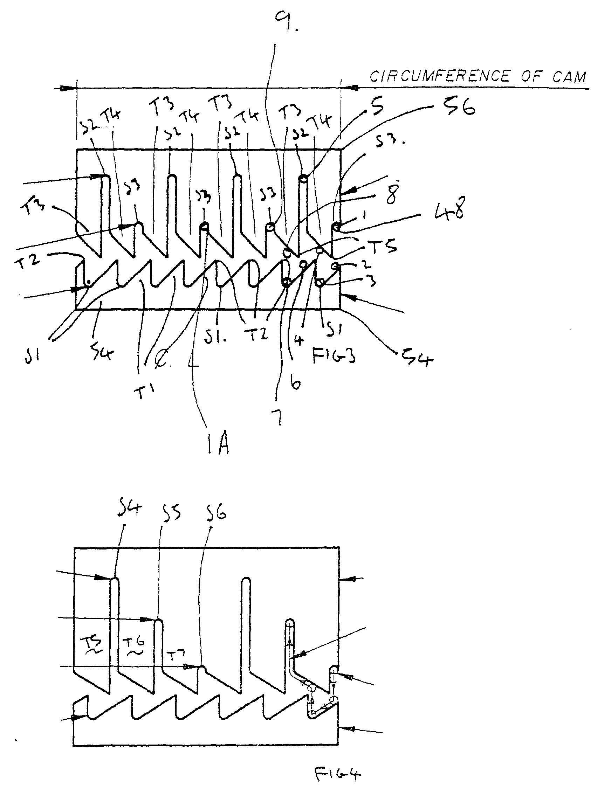

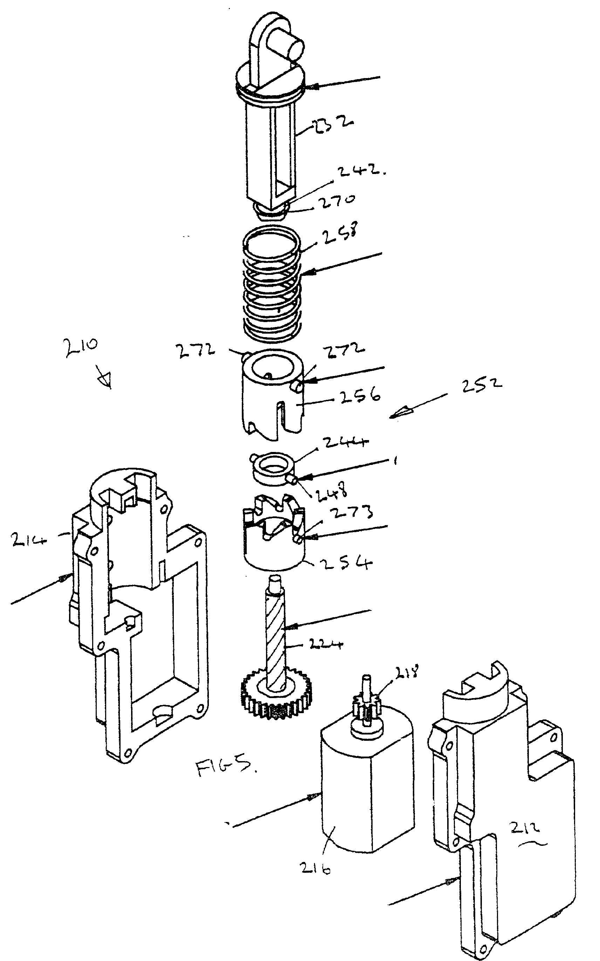

Consideration of figure 2 shows a cam arrangement 152 having a cam ring 154, similar to cam ring 54 but with only six teeth and a cam ring 156 similar to cam ring 56. However, in this case cam ring 156 has six teeth with three different tooth forms T5, T6 and T7 (see figure 4) which provide for three different cam follower stop positions S4, S5 and S6. Cam ring 154 only has six teeth, all of identical form.

Operation of actuator 10 when incorporating cam arrangement 152 provides for one plunger position when the motor is energised (as with cam arrangement 52) but three plunger positions when the motor is de-energised i.e. when the cam follower pins 48 abut cam follower stops S4, S5 and S6 respectively.

Consideration of figure 5 shows a second embodiment of an actuator 210 in which components which fulfil the same function as those in actuator 10 are labelled 200 greater.

In this case it should be noted that motor 216 drives pinion 218 directly, there being no centrifugal clutch on this arrangement.

Furthermore the cam follower 244 is held axially fast relative to plunger 232 by a resilient lip 270 of spigot 242.

In this case pins 272 and 273 ensure that cam rings 256 and 254 remain both axially and rotationally fast within the right and left hand casing 212 and 214.

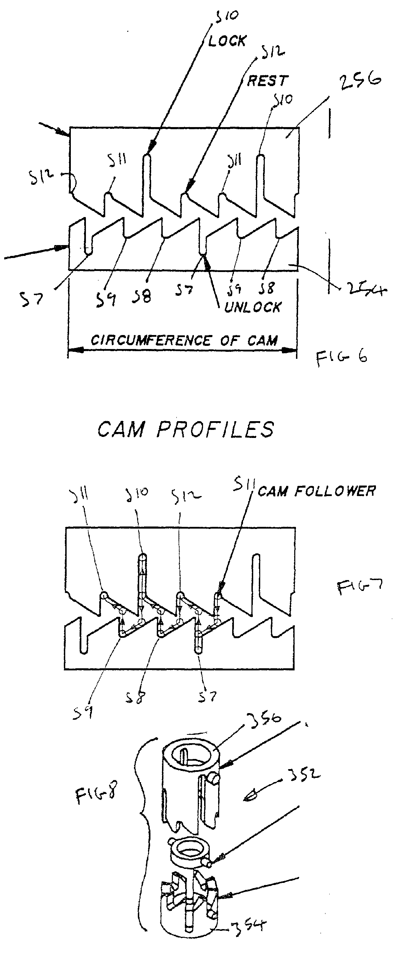

Consideration of figure 6 shows cam ring 254 has cam follower stops S7, S8 and S9 and cam ring 256 has cam follower stops S10, S11 and S12. In this case cam follower stops S8 and S9 are at the same axial position which is different from the axial position of cam follower stop S7. Furthermore cam follower stops S11 and S12 are also at the same axial position which is different from the axial position of cam follower stop S10.

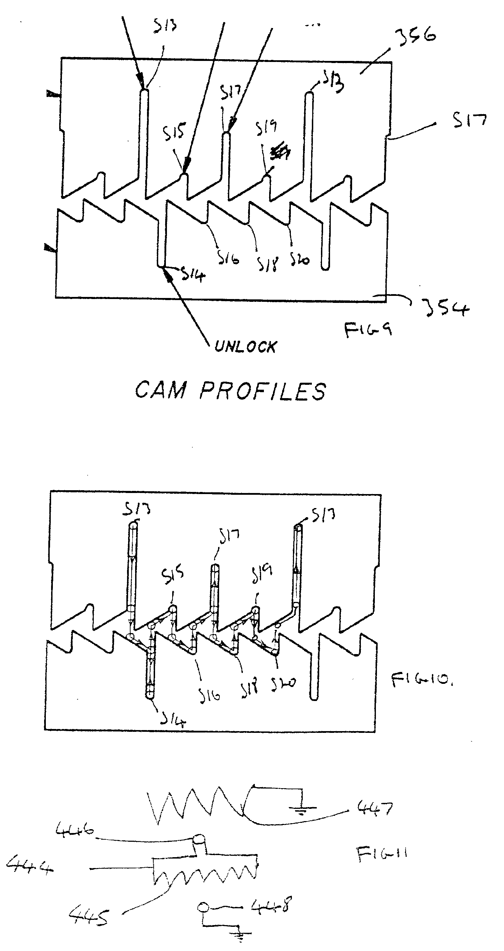

Assuming a start position of a cam follower pin 248 abutting cam follower stop S11 (see figure 7) then a complete cycle of the plunger would be as follows:-

S11 to S7 to S12 to S8 to S10 to S9 to S11.

Note that whilst the plunger has gone through a complete cycle as described above, the cam follower has only turned through 180 degrees.

Consideration of figure 8 shows an alternative form of cam arrangement 352 for use in the actuator of figure 5.

Consideration of figure 9 shows that cam ring 356 has cam follower stop S13 positioned at a different axial position to cam follower stops 17. Furthermore cam follower stops S15 and S19 are both positioned at the same axial position which is different to both cam follower stops S13 and S17.

Cam ring 354 has cam follower stops S16, S18 and S20 all positioned at the same axial position which is different from the axial position of cam follower stop S14. Sequential energisation and de-energisation of the motor 216 when the cam arrangement 352 is substituted for the cam arrangement 252 progressively moves a cam follower pin 248 as follows:-

S13 to S14 to S15 to S16 to S17 to S18 to S19 to S20 to S13 (see figure 10). Note in this example the cam follower is caused to rotate in an opposite direction when compared with figure 7.

The above embodiments demonstrate a way of providing an actuator having differing output positions. Any particular output position can correspond to a powered output position i.e. when the motor is being energised or an at rest position i.e. when the motor has being de-energised. It can be seen it is possible to provide an actuator with differing powered output positions and also differing at rest positions.

Further embodiments may provide for different combinations of powered output position and/or different combinations of rest positions. Furthermore it is clear that each cam arrangement is not limited to only having opposing teeth and it is also clear that the cam follower is not limited to only having two diametrically opposed cam follower.

Figures 1 to 10 show an arrangement with an axially and rotationally fixed caming arrangement which co-operates with a rotatable shuttle in the form of a cam follower. In this case the cam arrangement is in the form of two arrays of teeth on the cam rings which face each other. In an alternative arrangement it is possible to provide a shuttle arrangement rotatably on the plunger with two arrays of teeth which face away from each other and to provide two sets of cam followers, one set for each array of teeth, which are rotatably and axially fixed on the casings.

Figure 11 shows a schematic view of a further embodiment of the present invention in which a shuttle 444 is provided with an array of teeth 445 and a cam follower 446. A caming arrangement is provided by an array of teeth 447 and a cam follower 448, both of which are fixed axially and rotatably fast. The shuttle moves between the teeth 447 and cam follower 448 and is caused to rotate by engagement between teeth 447 and cam follower 445 and by engagement between teeth 445 and cam follower 448.

It can be seen that the cam follower pins of figures 1 to 11 provide the two functions, namely that of indexing the cam follower rotationally and also of providing stop abutment with the plunger. In alternative embodiments these two functions need not be provided by the same component, thus cam follower pin could solely provide the means for indexing the cam follower rotationally and the axial position of the plunger could be defined an alternative stop arrangement.

Furthermore the preceding description has described how by energising and deactivating a motor, the various output positions can be achieved. It should be noted that it is also possible to achieve any particular output position by applying a force to the plunger, in particular a manual force. Thus sequential pressing and release of for example the plunger 32 of figure 1 in a downwards direction will cause the cam follower retaining ring to index around allowing the plunger to achieve, in particular, the two at rest output conditions.

Whilst the various actuators described can be used in varying circumstances, they are particularly useful when used as actuators for altering the state of vehicle door locks. Thus the plunger can be connected to vehicle door locks to provide for the following functions:-

With regard to figures 1 and 3 the plunger can be connected to the door lock such that when the cam follower pins 48 abut cam follower stops S2, the corresponding door lock is in a locked condition and when the cam follower pins 48 abut cam follower stops S3 the corresponding door lock is in a unlocked condition. Cam follower stop S1 corresponds to a transient condition of the actuator as the lock moves between locked and unlocked conditions.

The embodiments shown in figure 2 and 4 could typically be used in a lock having a superlock condition wherein cam follower stop S4 corresponds to the superlocked condition, cam follower stop S5 corresponds to the locked condition and cam follower stop S6 corresponds to the unlocked condition of the lock.

In view of the fact that all the embodiments shown in figures 1 to 4 include a centrifugal clutch, then it is possible to connect the plunger 32 to the lock mechanism without lost motion.

The embodiments shown in figure 5 to 7 would typically be used to lock and unlock a vehicle door lock with cam follower stop S10 corresponding to the lock condition, cam follower stop S7 corresponding to the unlocked condition and cam follower stops S12 and S11 corresponding to a rest condition of the motor.

The embodiments shown in figure 8 to 10 would typically be used on a lock having a superlock function wherein cam follower stop S13 corresponds to a superlock condition of the lock, cam follower stop S17 corresponds to a lock condition, cam follower stop S14 corresponds to a unlock condition and cam follower stop S15 and S19 correspond to a rest condition of the motor.

## Claims

1. An actuator including a motor operable to move an output member the actuator further including a shuttle and a caming arrangement axially movable relative to each other to provide rotational indexing of the shuttle and the caming arrangement relative to each other, so that different output positions of the output member are provided for.

2. An actuator as defined in claim 1 in which the motor drives a worm screw which in threaded engagement with the output member.

3. An actuator as defined in claim 2 in which the motor drives the worm screw via gears.

4. An actuator as defined in claim 2 or 3 in which the motor drives the output member via a centrifugal clutch.

5. An actuator as defined in any preceding claim in which the motor only drives the output member in a first direction.

6. An actuator as defined in any preceding claim in which a bias means biases the output member in a second direction.

7. An actuator as defined in any preceding claim in which the shuttle is axially fast on the output member.

8. An actuator as defined in any preceding claim in which the shuttle is rotatable relative to the output member.

9. An actuator as defined in any preceding claim in which the shuttle is a cam follower which has an annular body and at least one radially projecting cam follower pin.

10. An actuator as defined in any preceding claim in which the shuttle further acts as a stop abutment to define different output positions of the actuator.

11. An actuator as defined in any preceding claim in which the caming arrangement is provided by a first cam surface on a first axial side of the shuttle and a second cam surface on a second axial side of the shuttle.

12. An actuator as defined in claim 11 in which the first and second cam surfaces each provide rotational indexing of the shuttle relative to the caming arrangement.

13. An actuator as defined in claim 11 or 12 in which the first and second cam surfaces include an array of teeth edges, with a cam follower stop, being located between adjacent teeth edges.

14. An actuator as defined in claim 13 in which the cam follower stops of the first cam surface provide differing output positions of the actuator.

15. An actuator as defined in claim 13 or 14 in which the cam follower stops of the second cam surface provide differing output positions of the actuator.

16. An actuator as defined in any preceding claim having a powered position corresponding to each of the output positions of the actuator.

17. An actuator as defined in any preceding claim having an at rest position differing from the powered output positions of the actuator.

18. An actuator as defined in any preceding claim for use in a vehicle door locking system to provide locking and unlocking a vehicle door lock.

19. An actuator as defined in claim 18 further providing for superlocking of the vehicle door lock.

20. An actuator as defined in any preceding claim in which the output positions are located on a straight line.

21. An actuator as defined in any preceding claim in which the motor is powered in a single direction to provide for the differing output positions of the actuator.
